# EUROPEAN PATENT APPLICATION

(11) **EP 4 844 851 A1**
(43) Date of publication of application: **25.11.2026**
(21) Application number: 25831143.0
(22) Date of filing: 16.06.2025
(51) Int. Cl.: H01M 10/04, B65G 57/04, B65G 47/91, B65G 35/06

(54) **STACKING FACILITY AND METHOD FOR MANUFACTURING ELECTRODE ASSEMBLY**

(30) Priority: 17.06.2024 KR 20240078121
(71) Applicant: LG Energy Solution, Ltd., Seoul 07335 (KR)
(72) Inventor: OH, Jung Yun, Daejeon 34122 (KR); MOON, Jong Min, Daejeon 34122 (KR); LEE, Hak Soo, Daejeon 34122 (KR); KIM, Chang Hee, Daejeon 34122 (KR); HONG, Seung Hyeon, Daejeon 34122 (KR); SHIM, Kyu Won, Daejeon 34122 (KR); KIM, Jae In, Daejeon 34122 (KR); YUN, Se Yeon, Daejeon 34122 (KR); KOO, Dong Jae, Daejeon 34122 (KR)
(74) Representative: Plasseraud IP
(86) International application number: PCT/KR2025/008242
(87) International publication number: WO 2025/263929

(57) **Abstract**

The present invention relates to a stacking facility and a method for manufacturing an electrode assembly, and more specifically, relates to a stacking facility and a method of laminating an electrode assembly, capable of sensing collisions between a constitution for transporting unit cells and a constitution for fixing an electrode assembly to a pallet in a process of manufacturing an electrode assembly by laminating multiple unit cells.

According to one example of the present invention, during a process that a suction plate laminates a second half-finished cell on a first half-finished cell, when a correction amount of the suction plate is so large that interference with a clamp occurs, it may provide a stacking facility capable of sensing a collision between the clamp and the suction plate, and a control method thereof.

## Description

### Technical Field

The present invention relates to a stacking facility and a method for manufacturing an electrode assembly, and more specifically, relates to a stacking facility and a method of laminating an electrode assembly, capable of sensing collisions between a constitution for transporting unit cells and a constitution for fixing an electrode assembly to a pallet in a process of manufacturing an electrode assembly by laminating multiple unit cells.

This application claims the benefit of priority to Korean Patent Application No. 10-2024-0078121 dated June 17, 2024, the disclosure of which is incorporated herein by reference in its entirety.

### Background Art

Secondary batteries can be classified into lithium-ion batteries, lithium-ion polymer batteries, and the like, depending on constitutions of an electrode assembly (30) and an electrolyte, and can be classified into rectangular batteries, pouch-type batteries, cylindrical batteries, and the like, depending on a shape of a battery case.

The electrode assembly (30) has a structure consisting of a negative electrode (2), a positive electrode (3), and a separator (1) interposed between the negative electrode (2) and the positive electrode (3), which can be referred to as a rechargeable power generation element. The electrode assembly (30) is manufactured using the negative electrode, positive electrode, and separator, where there are various manufacturing methods.

The electrode assembly (30) can be classified into a jellyroll type, in which a separator (1) is interposed between the negative electrode (3) and the positive electrode (2), coated with active materials, in a long sheet shape, and a stack type, in which multiple negative electrodes (3) and positive electrodes (2) are sequentially laminated with the separator (1) interposed therebetween. As one example, the electrode assembly (30) can be manufactured by sequentially laminating the negative electrode, the separator, and the positive electrode. Of course, there may also be various lamination methods.

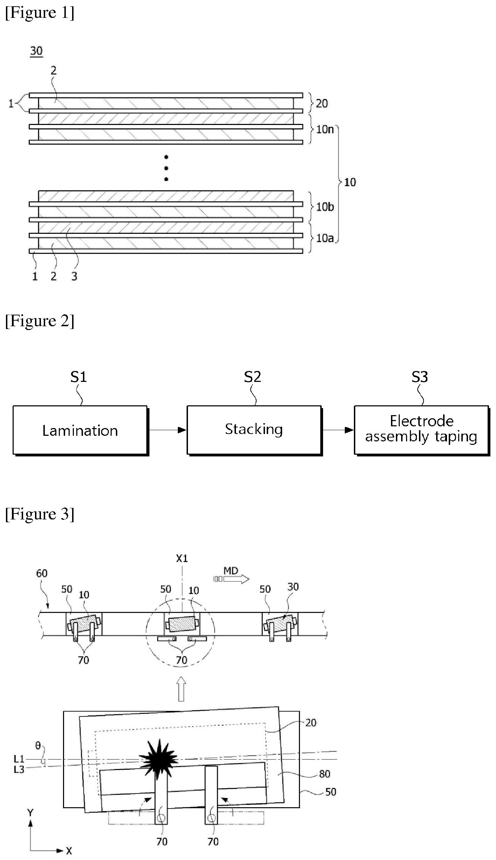

Figure 1 schematically illustrates a configuration diagram of an electrode assembly. Figure 2 schematically illustrates a manufacturing flowchart of an electrode assembly, which specifically illustrates an order of manufacturing an electrode assembly through lamination.

The electrode assembly (30) is formed by laminating multiple unit cells (10a to 10n) and one second half-finished cell (20). In this document, a state where multiple unit cells (10a to 10n) are laminated is referred to as a "first half-finished cell (10)." The unit cells (10a to 10n) may be mono-cells. The first half-finished cell (10) may be a stacked cell in which the mono-cells are laminated. The second half-finished cell (20) may be a half-cell.

Referring to Figure 2, the stacked electrode assembly (30) may be manufactured through a laminating step (S1), a stacking step (S2), and a taping step (S3). The taping step (S3) may be performed for maintaining the external appearance of the electrode assembly (30) by taping the outer surface of the electrode assembly (30), and maintaining the stacked state.

The laminating step (S1) is for manufacturing unit cells (10a to 10n) and a second half-finished cell (20).

In the laminating step (S1), the unit cell (10a to 10n) may be formed by laminating a separator (1), a negative electrode (2), a separator (1), and a positive electrode (3). The second half-finished cell (20) may be formed by laminating a separator (1), a negative electrode (2), and a separator (1). That is, the laminating step (S1) may be a step for sequentially laminating a separator, a negative electrode, and a positive electrode, each formed as a single sheet, to manufacture a mono-cell and a half-cell. That is, it may be a step for manufacturing half-finished products, which are components for manufacturing a final electrode assembly.

The stacking step (S2) is for laminating multiple unit cells (10a to 10n), and then laminating a second half-finished cell (20) on the top of the laminated unit cells.

In the stacking step (S2), multiple unit cells (10a to 10n) are sequentially laminated to form a first half-finished cell (10). Then, a second half-finished cell (20) is laminated on the upper surface of the first half-finished cell (10), which can be manufactured as an electrode assembly (30).

As one example, the first half-finished cell (10) is moved to the final laminating position in a state fixed through a clamp, and then a suction plate adsorbs the second half-finished cell (20), whereby the second half-finished cell (20) can be laminated on the upper portion of the first half-finished cell. At this time, interference can occur between the clamp and the suction plate for various reasons.

Figure 3 illustrates an interference problem occurring between a suction plate and a clamp.

First, the clamp fixes the first half-finished cell (10) and is transported to the laminating position together with the first half-finished cell (10). At the laminating position, the clamp (70) is unclamped, and the second half-finished cell (20) is laminated on the upper portion of the first half-finished cell (10) through the suction plate (80). Thereafter, the clamp clamps the lamination-completed electrode assembly (30) and moves to a subsequent position together with the electrode assembly. The clamp repeats clamping and unclamping process through a swinging motion.

In the suction plate (80), an avoidance groove for avoiding interference upon swinging motion of the clamp may be formed. However, when the suction plate (80) is misaligned, interference may occur between the suction plate (80) and the clamp.

The clamping interference position may be a position where the suction plate (80) is placed on the upper surface of the first half-finished cell (10) such that the virtual center line (L3) of the suction plate (80) is misaligned by a predetermined angle (θ), for example, 6° or more, relative to the virtual center line (L1) of the pallet (50). As one example, when the position of the suction plate is misaligned by less than 6°, clamping interference may not occur.

The first half-finished cell (10) is loaded onto a pallet (50) and transported to the laminating position (X1) in a state fixed to a clamp (70) mounted on the pallet (50).

The second half-finished cell (20) may be transported to the laminating position (X1) in a state suctioned on, as one example, a suction plate (80) of a SCARA robot. The SCARA robot is operated so that the second half-finished cell (20) is laminated on the upper surface of the first half-finished cell (10), by adjusting the position of the suction plate (80) on the upper portion of the first half-finished cell (10) so that the second half-finished cell (20) is aligned with the first half-finished cell (10), and then lowering the suction plate (80).

If the first half-finished cell (10) is in a state tilted at a predetermined angle (θ) without being loaded at a normal position on an XY plane of the pallet (50), the suction plate (80) is positionally corrected to be tilted at a predetermined angle (θ) from the normal position of the pallet (50).

However, if the suction plate (80) is tilted at a predetermined angle (θ) from the normal position of the pallet (50) to be placed at a clamping interference position, the clamp (70) may collide with the suction plate (80) during the clamping operation for fixing the second half-finished cell (20) to the upper surface of the first half-finished cell (10).

Such collision or interference occurs because the clamping position and clamping path of the clamp (70) on the XY plane of the pallet (50) are fixed, whereas the suction plate (80) is positionally adjusted according to the loading position of the first half-finished cell (10).

The position correction of the suction plate (80) according to the loading position of the first half-finished cell (10) is intended to laminate the second half-finished cell (20) in an aligned state with the first half-finished cell (10) when the first half-finished cell (10) is misaligned from its normal position on the XY plane of the pallet (50) during the loading process on the pallet (50).

If the suction plate (80) is placed at a clamping interference position on the upper surface of the first half-finished cell (10) due to the position correction, the clamp (70) may collide with the suction plate (80) upon the clamping operation of the clamp (70) after the second half-finished cell (20) is loaded on the upper surface of the first half-finished cell (10).

Misalignment of the first half-finished cell (10) relative to the XY plane of the pallet (50) primarily occurs during the process that multiple unit cells (10a to 10n) are laminated to be manufactured to the first half-finished cell (10). When the positional correction amount of the suction plate (80) is sufficiently large to cause interference with the clamp (70), such a problem may repeatedly occur upon clamping after loading of the second half-finished cell (20) for each pallet (50) moving along the conveyor (60).

Also, damage to the second half-finished cell (20) may occur during the process that the clamp (70) collides with the suction plate (80). The damage to the second half-finished cell (20) may cause quality deterioration of the secondary battery.

Furthermore, during the process that the clamp (70) collides with the suction plate (80), the second half-finished cell (20) is misaligned with the first half-finished cell (10), whereby a positional deviation may occur in the laminating direction. This causes taping failure of the electrode assembly (30) during the taping step (S3). Consequently, this causes an increase of defect rates in secondary batteries.

### Disclosure

### Technical Problem

The present invention aims to solve problems in conventional stacking facilities and stacking methods using the same, and moreover secondary battery manufacturing methods.

According to one example of the present invention, during a process that a suction plate laminates a second half-finished cell on a first half-finished cell, when a correction amount of the suction plate is so large that interference with a clamp occurs, it may provide a stacking facility capable of sensing a collision between the clamp and the suction plate, and a control method thereof.

According to one example of the present invention, it may provide a stacking facility capable of preventing stacking failures in advance by automatically stopping operation of the stacking facility if a collision between the clamp and the suction plate is sensed, and a control method thereof.

According to one example of the present invention, it may provide a stacking facility capable of providing a warning alarm if a collision between the clamp and the suction plate is sensed, and a control method thereof.

According to one example of the present invention, when a correction amount of a suction plate is large, by mounting a sensor in an interference region where collision with a clamp is likely to occur, it may provide a stacking facility capable of sensing whether the clamp enters the interference region in a state where the suction plate is positioned on the upper surface of the first half-finished cell, and a method of laminating an electrode assembly.

According to one example of the present invention, it may provide a stacking facility capable of preventing production of defective electrode assemblies in advance by stopping production of electrode assemblies if a collision between the clamp and the suction plate is sensed, and a method of laminating an electrode assembly.

### Technical Solution

According to one example of the present invention, it may provide a stacking device or stacking facility comprising a suction plate for laminating a second half-finished cell on a first half-finished cell, a clamp provided to press the lamination-completed cell by pressing the upper portion of the second half-finished cell after the second half-finished cell has been laminated, and a sensor for sensing a collision between the clamp and the suction plate during clamping operation of the clamp, or for sensing a collision in advance.

The suction plate may be provided such that the second half-finished cell is suction-transferred and then the second half-finished cell is placed on the upper portion of the first half-finished cell at a laminating position. That is, the suction plate and the second half-finished cell may be separated by releasing the suction. In this instance, it is preferable that the suction release is performed, after the clamp operates to clamp the second half-finished cell by pressing it from top to bottom.

The suction plate may be provided to suction only a portion of the upper surface of the second half-finished cell, and the clamp may clamp a portion of the remaining portion that is not suctioned. That is, an open portion may be formed in the suction plat, whereby the clamping may be performed while the clamp moves into and out of the inside of the open portion.

The open portion region is a fixed region on the suction plate, and the clamping operation region is also fixed. However, the open portion region may vary relatively with respect to the clamping operation region due to left-right positional and misalignment deviations of the suction plate. Particularly, if these deviations increase, a portion where the open portion region and the clamping operation region overlap occurs, whereby a collision between both regions may occur.

If the collision occurs between the suction plate and the clamp during the stacking process, a case where the laminating position of the second half-finished cell is misaligned may occur, and the laminating position of the first half-finished cell may also be misaligned. Therefore, by preventing such a collision in advance, it is possible to improve production efficiency.

According to one example of the present invention, a stacking facility may comprise a conveyor including a pallet loaded with a first half- finished cell and a clamping device arranged to fix the first half-finished cell to the pallet, and arranged to transfer the pallet to a laminating position, and a pickup device including an open portion arranged for a clamp of the clamping device to be approachable and a suction plate having a suction surface to which a second half-finished cell is suctioned, and provided to laminate the second half-finished cell on the upper surface of the first half-finished cell, wherein the pickup device may comprise a sensor arranged to sense the clamp in an interference region of the open portion.

The pickup device may be stopped if the sensor senses the clamp.

The clamping device may be stopped if the sensor senses the clamp.

The pickup device may be arranged to provide a warning alarm if the sensor senses the clamp.

The sensor may be mounted on the suction plate to form a line-shaped sensing line in the interference region of the open portion, and may be arranged to sense the clamp when the sensing line is disconnected.

The interference region may comprise a first open surface facing the entry side of the open portion and a periphery of the first open surface, and may be a region capable of colliding with the clamp when the clamp enters the open portion, depending on a misalignment angle of the virtual center line of the suction plate relative to the virtual center line of the pallet.

The open portion may be arranged so that a partial region of the second half-finished cell without being suctioned to the suction surface is exposed to the outside, and the sensor may be mounted on the suction plate so that a sensing line is formed on the upper portion of the second half-finished cell exposed through the open portion.

The sensor may comprise a light emitter emitting light and a light receiver receiving light, and may form a sensing line, which is a line of light emitted from the light emitter and reaching the light receiver.

The light emitter and the light receiver may be mounted on the suction plate so that they face each other in the open portion and are spaced apart from the first open surface of the open portion and the suction surface, respectively.

The sensing line may be parallel to the virtual center line of the suction plate.

The sensing line may be formed to be spaced apart from the first open surface at a predetermined interval along the boundary between the suction surface of the suction plate and the first open surface.

The sensor may comprise a through-beam sensor.

The clamping device may comprise a clamping drive part mounted on one side of the pallet and arranged to move the clamp up and down along a height direction perpendicular to the pallet.

The clamping drive part may be arranged to rotate the clamp at a predetermined angle so that the clamp is parallel or orthogonal to the virtual center line of the pallet.

The clamp may be arranged to be contactable with a partial region of the upper surface of the first half-finished cell loaded on the pallet, and may be mounted to the clamping drive part to be parallel to the pallet.

The stacking facility may comprise a vision inspection device inspecting for misalignment of the first half-finished cell relative to the pallet based on the XY plane of the pallet by photographing the first half-finished cell loaded on the pallet coaxially with the laminating position and analyzing the image.

A method of laminating an electrode assembly according to one example of the present invention may comprise a second half-finished cell laminating step in which a pallet loaded with a first half-finished cell moves to a stopped laminating position in a state where a suction plate of a pickup device has suctioned a second half-finished cell, and the second half-finished cell is laminated on an upper surface of the first half-finished cell; a second half-finished cell clamping step in which in a state where the suction plate is positioned on the upper surface of the first half-finished cell, a clamp of a clamping device mounted on the pallet enters an open portion of the suction plate to fix the second half-finished cell to the upper surface of the first half-finished cell; and a collision sensing step of sensing a collision between the clamp and the suction plate through a sensor mounted on the suction plate.

The collision sensing step may be performed during the second half-finished cell clamping step.

The collision sensing step may be a step of sensing whether the clamp enters an interference region of the open portion when the clamp enters the open portion in a state where the suction plate is positioned on the upper surface of the first half-finished cell.

In the collision sensing step, if the sensor senses the clamp, the pickup device may provide a warning alarm.

In the collision sensing step, if the sensor senses the clamp, the stacking facility may be stopped.

The sensor may comprise a light emitter emitting light and a light receiver receiving light, may form a sensing line, which is a line of light emitted from the light emitter and reaching the light receiver, and may sense the clamp if the sensing line is disconnected by the clamp during the half-cell clamping step.

Before the second half-finished cell laminating step, it may comprise a vision inspection step in which a vision inspection device installed coaxially with the laminating position photographs the pallet on which the first half-finished cell is loaded, and inspects misalignment of the first half-finished cell with respect to the pallet based on the XY plane of the pallet.

In the second half-finished cell laminating step, the suction plate may be position-adjusted based on the misalignment angle of the first half-finished cell relative to the XY plane of the pallet, as obtained through the vision inspection step, such that the virtual center line of the suction plate is parallel to the virtual center line of the first half-finished cell and the center of the suction plate is positioned coaxially with the center of the first half-finished cell.

### Advantageous Effects

According to one example of the present invention, during a process that a suction plate laminates a second half-finished cell on a first half-finished cell, when a correction amount of the suction plate is so large that interference with a clamp occurs, a stacking facility can sense a collision between the clamp and the suction plate.

Specifically, when a correction amount of a suction plate is large, by mounting a sensor in an interference region where collision with a clamp is likely to occur, a stacking facility according to one example of the present invention can detect whether the clamp enters the interference region in a state where the suction plate is positioned on the upper surface of the first half-finished cell.

The interference region of the suction plate is a region where collision is expected upon clamping operation of the clamp when the suction plate is positioned on the upper surface of the first half-finished cell to be twisted at a predetermined angle from the normal position of the pallet.

If the clamp is sensed in the interference region of the suction plate, it is a state where the first half-finished cell is loaded to be twisted at a predetermined angle from the normal position of the pallet, which can cause a taping defect of the electrode assembly in a taping step which is a subsequent step.

In a stacking facility according to one example of the present invention, the stacking facility can automatically be stopped if a collision between the clamp and the suction plate is sensed. Accordingly, it is possible to prevent electrode assembly lamination defects from occurring in advance.

That is, the present invention can reduce the defect rate of electrode assemblies by automatically stopping the stacking facility if the clamp is sensed in the sensing line of the suction plate during the process of loading and fixing the second half-finished cell onto the upper surface of the first half-finished cell.

Furthermore, a stacking facility according to one example of the present invention can provide a warning alarm if a collision between the clamp and the suction plate is sensed. A worker can recognize the facility stop and the lamination defect of the first half-finished cell through the warning alarm, and perform subsequent treatment promptly.

### Description of Drawings

Figure 1 schematically illustrates a configurational diagram of an electrode assembly.
Figure 2 schematically illustrates a manufacturing flowchart of an electrode assembly.
Figure 3 is a diagram for explaining a problem occurring upon clamping operation for which a clamp fixes a second half-finished cell to a first half-finished cell in a state where a conventional suction plate has laminated the second half-finished cell onto the first half-finished cell at a clamping interference position.
Figure 4 is a planar arrangement state diagram of each component of a stacking facility according to one example of the present invention.
Figure 5 schematically illustrates an arrangement state diagram of a pallet mounted on a conveyor according to one example of the present invention, a suction plate, and a vision inspection device.
Figure 6 is operational state diagrams of a clamping device according to one example of the present invention, where Figure 6(a) is an operational state diagram in which a clamp fixes a first half-finished cell to a pallet, and Figure 6(b) is an operational state diagram in which a clamp releases fixing of a first half-finished cell.
Figure 7 schematically illustrates a schematic plan view of a suction plate mounted with a sensor according to one example of the present invention.
Figure 8 schematically illustrates a sectional side view of a suction plate mounted with a sensor according to one example of the present invention.
Figure 9 is a diagram for explaining operational states of a suction plate of the pickup device and a clamping device during a second half-finished cell laminating step according to one example of the present invention.
Figure 10 is an operational state diagram between a clamp and a suction plate when the clamp clamps a second half-finished cell in a state where the suction plate according to the present example is placed on a normal position of a pallet.
Figure 11 is an operational state diagram between a clamp and a suction plate when the clamp clamps a second half-finished cell in a state where the suction plate according to the present example is placed on a clamping interference position.
Figure 12 is a flowchart for explaining a method of laminating an electrode assembly according to one example of the present invention.

### Best Mode

Hereinafter, with reference to the accompanying drawings, a stacking facility, and a method of laminating an electrode assembly, according to a preferred example of the present invention will be described.

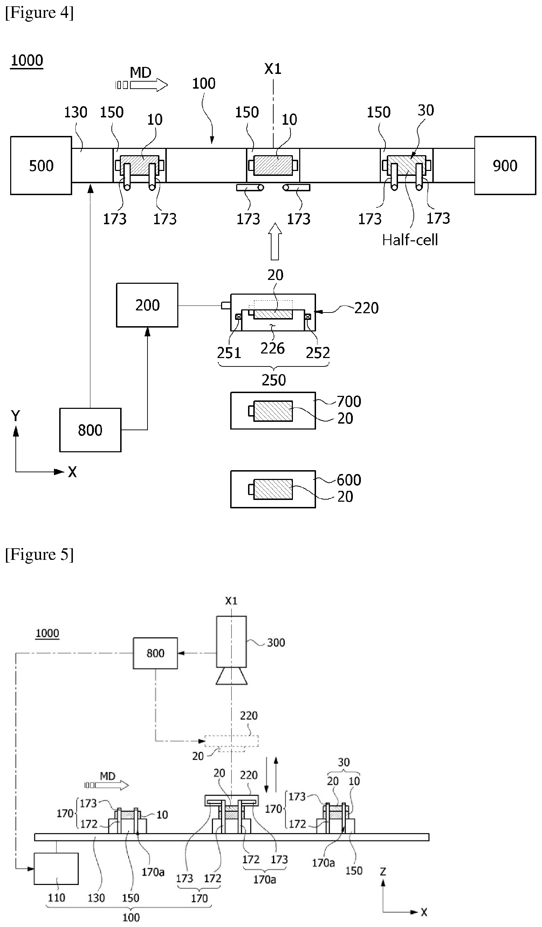

Figure 1 schematically illustrates a configurational diagram of an electrode assembly, Figure 4 is a planar arrangement state diagram of each component of a stacking facility according to one example of the present invention, and Figure 5 schematically illustrates an arrangement state diagram of a pallet mounted on a conveyor according to one example of the present invention, a suction plate, and a vision inspection device.

The stacking facility (1000) may comprise a conveyor (100) including a pallet (150) loaded with a first half-finished cell (10) and a clamping device (170) arranged to fix the first half-finished cell (10) to the pallet (150), and arranged to transfer the pallet (150) to a laminating position (X1), and a pickup device (200) including an open portion (226) arranged for a clamp (173) of the clamping device (170) to be approachable and an suction plate (220) having a suction surface (221) to which a second half-finished cell (20) is suctioned, and provided to laminate the second half-finished cell (20) on the upper surface of the first half-finished cell (10), wherein the pickup device (200) may comprise a sensor (250) arranged to sense the clamp (173) in an interference region of the open portion (226).

Referring to Figures 4 and 5, the stacking facility (1000) comprises a conveyor (100), a pickup device (200), a vision inspection device (300), a unit cell lamination device (500), a taping device (900), and a controller (800).

The conveyor (100) comprises a pallet (150) loaded with a first half-finished cell (10) and a clamping device (170) arranged to fix the first half-finished cell (10) to the pallet (150), and is arranged to transfer the pallet (150) to a laminating position (X1). The conveyor (100) may be a linear motion system (LMS).

The pickup device (200) comprises a suction plate (220) and a sensor (250), and is arranged so that the second half-finished cell (20) is suctioned and transported to the pallet (150). The pickup device (200) may laminate the second half-finished cell (20) on the upper surface of the first half-finished cell (10) through the suction plate (220). The pickup device (200) may be a SCARA robot.

The stacking facility (1000) is a device for manufacturing an electrode assembly (30) by loading the first half-finished cell (10) onto the pallet (150) through the unit cell lamination device (500), laminating the second half-finished cell (20) on the upper surface of the first half-finished cell (10) through the pickup device (200) at a laminating position (X1), and then taping the first half-finished cell (10) and the second half-finished cell (20) through the taping device (900).

Referring to Figure 1, the electrode assembly (30) comprises a plurality of unit cells (10a to 10n, see Figure 1) and one second half-finished cell (20). The electrode assembly (30) is obtained by laminating a negative electrode (2) and a positive electrode (3) sequentially via a separator (1).

The unit cell (10a to 10n, see Figure 1) is a half-finished product in which a separator (1), a negative electrode (2), a separator (1), and a positive electrode (3) are sequentially laminated. The first half-finished cell (10) is formed by laminating a plurality of unit cells (10a to 10n, see Figure 1). The second half-finished cell (20) is a half-finished product in which a separator (1), a negative electrode (2), and a separator (1) are sequentially laminated.

Hereinafter, the conveyor will be described with reference to Figures 4 to 6.

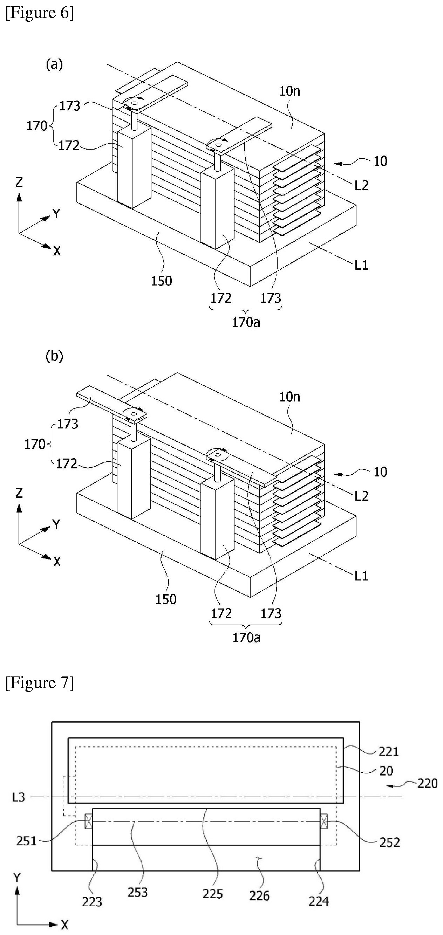

Figure 6 is operational state diagrams of a clamping device (170) according to one example of the present invention, where Figure 6(a) is an operational state diagram in which a clamp (173) fixes a first half-finished cell (10) to a pallet (150), and Figure 6(b) is an operational state diagram in which a clamp (173) releases fixing of a first half-finished cell (10).

The conveyor (100) comprises a pallet (150) on which the clamping device (170) is mounted, a rail (130) on which the pallet (150) is movably mounted, and a transfer drive part (110) providing driving force to the pallet (150). The transfer drive part (110) may be a motor.

Referring to Figure 4, the conveyor (100) is connected in line to a unit cell lamination device (500) and a taping device (900). The conveyor (100) may transfer the pallet (150) from the unit cell lamination device (500) to a laminating position (X1), and from the laminating position (X1) to the taping device (900).

The laminating position (X1) is one point on the rail (130), which is between the unit cell lamination device (500) and the taping device (900). The laminating position (X1) is a position where the second half-finished cell (20) is laminated on the upper surface of the first half-finished cell (10) loaded on the pallet (150). The rail (130) is disposed parallel to the X-axis.

Referring to Figure 6, the pallet (150) has a plate-shaped structure, which is arranged for the first half-finished cell (10) to be loadable. Referring to Figure 4, the pallet (150) may sequentially move along the rail (130) to the unit cell lamination device (500), the laminating position (X1), and the taping device (900).

Referring to Figure 6, a clamping device (170) is mounted on the pallet (150). The clamping devices (170) may be individually mounted on each pallet (150).

The clamping device (170) is a device for fixing the first half-finished cell (10) to the pallet (150). The clamping device (170) is movable together with the pallet (150). The clamping device (170) comprises a clamping drive part (172) and a clamp (173).

In this document, referring to Figure 6(a), the position where the clamp (173) is orthogonal to the virtual center line (L1) of the pallet (150) and contactable with the upper surface of the first half-finished cell (10) is referred to as a "clamping position."

Then, referring to Figure 6(b), the position where the clamp (173) is higher than the height of the upper surface of the first half-finished cell (10) in the height direction (z) of the pallet and spaced parallel to the virtual center line (L1) of the pallet (150) is referred to as an "unclamping position."

The clamping drive part (172) may be mounted on one side of the pallet (150), and may be arranged to move the clamp (173) up and down along the height direction (z) perpendicular to the pallet (150). The clamping drive part (172) may be arranged in a cylindrical type.

Then, the clamping drive part (172) may be arranged to rotate the clamp (173) at a predetermined angle so that the clamp (173) is parallel or orthogonal to the virtual center line (L1) of the pallet (150). Hereinafter, for convenience of explanation, the operation of fixing the first half-finished cell (10) or the electrode assembly (30) to the pallet (150) is referred to as a "clamping operation."

The clamp (173) may be arranged to be surface-contactable with a partial region of the first half-finished cell (10). The clamp (173) may be arranged in a bar shape. In the clamp (173), a portion in contact with the first half-finished cell (10) may be formed of a rubber material. The clamp (173) may be mounted on the drive shaft of the clamping drive part (172) parallel to the pallet (150).

Furthermore, the pallet (150) may be mounted with a pair of clamping devices (170, 170a).

The pair of clamping devices (170, 170a) may be operated such that at a clamping position (see Figure 6(a)) where the pair of clamps (173) is orthogonal to the virtual center line (L1) of the pallet (150) and pressurizes the upper surface of the first half-finished cell (10), it rotates 90° in a direction away from the first half-finished cell to be positioned parallel to the virtual center line (L1) of the pallet (150) in a straight line (see Figure 6(b)).

Hereinafter, the pickup device (200) will be described with reference to Figures 4, 7, and 8.

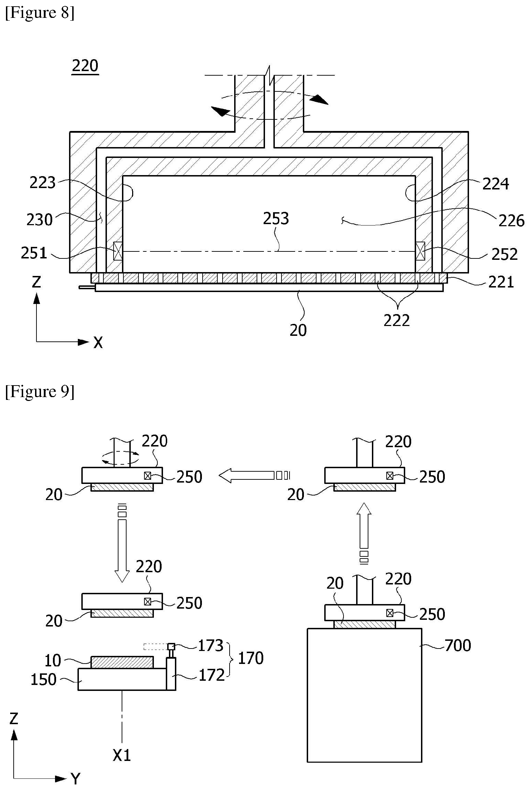

Figure 7 schematically illustrates a schematic plan view of a suction plate mounted with a sensor according to one example of the present invention, and Figure 8 schematically illustrates a sectional side view of a suction plate mounted with a sensor according to one example of the present invention.

The pickup device (200) comprises a suction plate (220) and a sensor (250).

The pickup device (200) moves the suction plate (220) up and down along a height direction (z) perpendicular to a floor surface, and is arranged to be capable of reciprocating between a second half-finished cell magazine (600) and a rail (130). The height direction (z) is parallel to the laminating direction of the first half-finished cell.

The pickup device (200) is arranged to move the suction plate (220) in a direction different from the travel direction (MD) of the pallet (150). The pickup device (200) is arranged to move the suction plate (220) in the Y-axis and Z-axis directions. Then, the pickup device (200) is arranged such that the suction plate (220) is adjustable to a predetermined angle on the XY plane.

The second half-finished cell magazine (600) and the buffer table (700) may be disposed to be spaced apart in the Y-axis direction.

The second half-finished cell magazine (600) is a box in which the second half-finished cell (20) is loaded. A buffer table (700) is disposed between the second half-finished cell magazine (600) and the rail (130). The buffer table (700) is a table on which the second half-finished cell (20) transported from the second half-finished cell magazine (600) is seated. The buffer table (700) is arranged, to prevent the second half-finished cell (20) from being laminated on the upper surface of the first half-finished cell (10).

The suction plate (220) suctions the second half-finished cell (20) loaded on the top of the second half-finished cell magazine (600) to transport it to the buffer table (700), and releases the suction of the second half-finished cell (20) in the buffer table (700). Then, it may suction one sheet of the second half-finished cell (20) placed on the buffer table (700) to move it to the upper portion of the laminating position (X1).

Referring to Figures 7 and 8, the suction plate (220) has a suction surface (221) arranged with a plurality of holes (222), a vacuum line (230) providing vacuum pressure to the plurality of holes (222), and an open portion (226).

The open portion (226) is arranged for the clamp (173) to be approachable. The open portion (226) has a first open surface (225) facing the entry side through which the clamp (173) enters, and a second open surface (223) and a third open surface (224) connected to the first open surface (225) and facing each other. The first open surface (225) to the third open surface (224) are connected in the circumferential direction of the suction plate (220). The open portion (226) is a space surrounded by the first open surface (225) to the third open surface (224).

The suction plate (220) is arranged such that a partial region of the second half-finished cell (20) is suctioned to the suction surface (221), and the remaining region of the second half-finished cell (20) without being suctioned to the suction surface (221) is exposed to the outside through the open portion (226).

The suction plate (220) is arranged to be angle-adjustable in a state of being parallel to the XY plane of the pallet (150). The position correction of the suction plate (220) is intended to laminate the second half-finished cell (20) in an aligned state with the first half-finished cell (10) when the first half-finished cell (10) is loaded out of the normal position on the XY plane of the pallet (150) during a process of being loaded on the pallet (150).

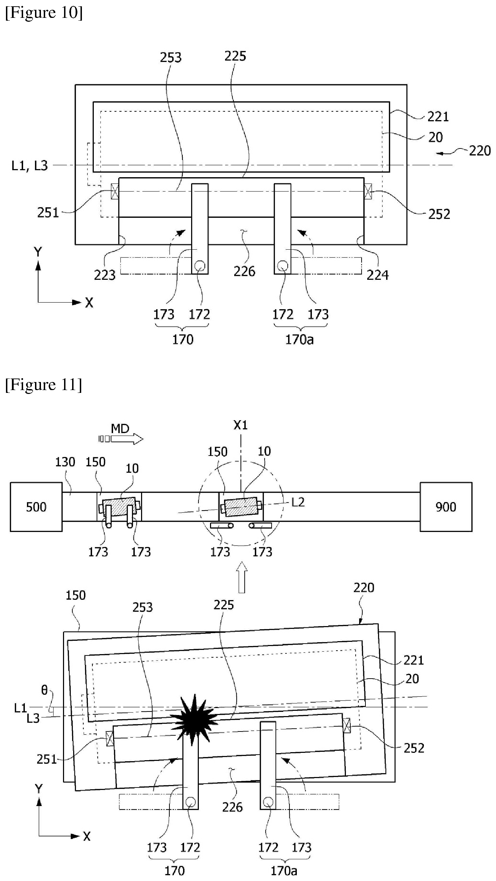

However, as illustrated in Figure 10, if the suction plate (220) is placed at a clamping interference position on the upper surface of the first half-finished cell (10) due to the position correction, the clamp (173) may collide with the suction plate (220) upon the clamping operation of the clamp (173) after the second half-finished cell (20) is loaded on the upper surface of the first half-finished cell (10).

The clamping interference position is a position where the suction plate (220) is placed on the upper surface of the first half-finished cell (10) such that the virtual center line (L3) of the suction plate (220) is tilted at a predetermined angle relative to the virtual center line (L1) of the pallet (150).

When the correction amount of the suction plate (220) is sufficiently large to cause interference with the clamp (173), the misalignment of the first half-finished cell (10) primarily occurs during the process of mostly laminating multiple unit cells (10a to 10n, see Figure 1) on the pallet (150).

When the correction amount of the suction plate (220) is sufficiently large to cause interference with the clamp (173), such a problem may repeatedly occur upon clamping after loading of the second half-finished cell (20) for each pallet (150) moving along the rail (130) of the conveyor (100).

To solve such a problem, a sensor (250) is mounted in the interference region of the open portion (226) of the suction plate (220), whereby it is possible to sense the collision between the clamp (173) and the suction plate (220).

The sensor (250) is mounted on the suction plate (220) to form a line-shaped sensing line (253) in the interference region of the open portion (226).

The sensor (250) may be mounted on the suction plate (220) so that the sensing line (253) is formed on the upper portion of the second half-finished cell (20) exposed through the open portion (226).

The sensor (250) may be arranged to sense the clamp (173) when the sensing line (253) is disconnected.

The sensor (250) comprises a light emitter (251) emitting light and a light receiver (252) receiving light.

The light emitter (251) may be mounted on the second open surface (223) to be spaced apart at predetermined intervals from the first open surface (225) and the suction surface (221), respectively.

The light receiver (252) may be mounted on the third open surface (224) to face the light emitter (251). The light receiver (252) may be mounted on the third open surface (224) to be spaced apart at predetermined intervals from the first open surface (225) and the suction surface (221), respectively.

The sensing line (253) may be a line of light formed as light is emitted from the light emitter (251) and reaches the light receiver (252). The sensing line (253) may be parallel to the virtual center line (L3) of the suction plate (220).

Meanwhile, Figure 10 illustrates a shape in which a sensing line (253) and a clamp (173) interfere when an error correction amount of a suction plate is small. This can be regarded that the sensing line (253) and the sensors (251, 252) are illustrated to be exaggerated, and parallel spacing between the first open surface (225) or the first open surface line and the sensing line is illustrated to be exaggerated. Really, the sensing line (253) may be formed very close to the first open surface (225) or the first open surface line, so that the clamp (173) and the sensing line (253) do not interfere when the error correction amount of the suction plate is small. Of course, when the error correction amount, especially the distortion correction amount, of the suction plate increases, the clamp and the sensing line may interfere. By sensing such interference in advance, it is possible to prevent stacking failures in advance.

The sensing line (253) may be spaced apart from the first open surface (225) by a predetermined interval (specific value) along the boundary between the suction surface (221) and the first open surface (225) of the open portion (226). The sensing line (253) may be formed on the upper portion of the second half-finished cell (20) exposed through the open portion (226).

The sensor (250) may sense the clamp (173) when the sensing line (253) is disconnected. The sensor (250) may comprise a through-beam sensor (250).

The interference region comprises a first open surface (225) facing the entry side of the open portion (226) and a periphery of the first open surface (225).

The interference region may be a region capable of colliding with the clamp (173) when the clamp (173) enters the open portion (226), depending on a misalignment angle of the virtual center line (L3) of the suction plate (220) relative to the virtual center line of the pallet (150).

The interference region may be between the clamp (173) positioned to be orthogonal to the virtual center line (L1) of the pallet (150) in the open portion (226) and the first open surface (225) when the virtual center line (L3) of the suction plate (220) is disposed coaxially and parallel to the virtual center line (L1) of the pallet (150).

The sensor (250) may be mounted on the suction plate (220) to sense the clamp (173) upon the second half-finished cell clamping operation of the clamp (173) in a state where the virtual center line (L3) of the suction plate (220) is twisted by a predetermined interval relative to the virtual center line (L1) of the pallet (150). The predetermined angle may be approximately 6° or more.

The controller (800) may operate the clamping device (170) and the pickup device (200) so that the suction plate (220) suctions the second half-finished cell (20) in the buffer table (700) to laminate it on the upper surface of the first half-finished cell (10) loaded on the pallet (150), and the second half-finished cell (20) is fixed to the upper surface of the first half-finished cell (10) through the clamp (173).

The controller (800) may operate the pickup device (200) so that the virtual center line (L3) of the suction plate (220) is parallel to the virtual center line (L2) of the first half-finished cell (10) and the center of the suction plate (220) is coaxially located with the center of the first half-finished cell (10), based on the misalignment angle of the first half-finished cell (10) with respect to the XY plane of the pallet (150) acquired from the vision inspection device (300).

The vision inspection device (300) is a device performing vision inspection of the misalignment of the first half-finished cell (10) with respect to the virtual center line (L1) of the pallet (150) in the XY plane of the pallet (150) by photographing the first half-finished cell (10) loaded on the pallet (150) and analyzing the image. The vision inspection device (300) may be installed on the upper portion of the rail (130) of the conveyor (100) coaxially with the laminating position (X1).

The controller (800) may operate the clamping device (170) and the pickup device (200) so that the suction plate (220) moves to the upper surface of the first half-finished cell (10) in a state where the clamp (173) releases the fixing of the first half-finished cell (10), thereby laminating the second half-finished cell (20) on the upper surface of the first half-finished cell (10).

Furthermore, the controller (800) may operate the clamping device (170) and the pickup device (200) so that the clamp (173) of the clamping device (170) mounted on the pallet (150) enters the open portion (226) of the suction plate (220) to fix the second half-finished cell (20) to the upper surface of the first half-finished cell (10), in a state where the suction plate (220) is positioned on the upper surface of the first half-finished cell (10).

The controller (800) may stop the stacking facility (100) if the sensor (250) senses the clamp (173). The pickup device (200) may be arranged to provide a warning alarm if the sensor (250) senses the clamp (173).

Hereinafter, a method of laminating an electrode assembly will be described with reference to Figures 4, 5, and 9 to 12.

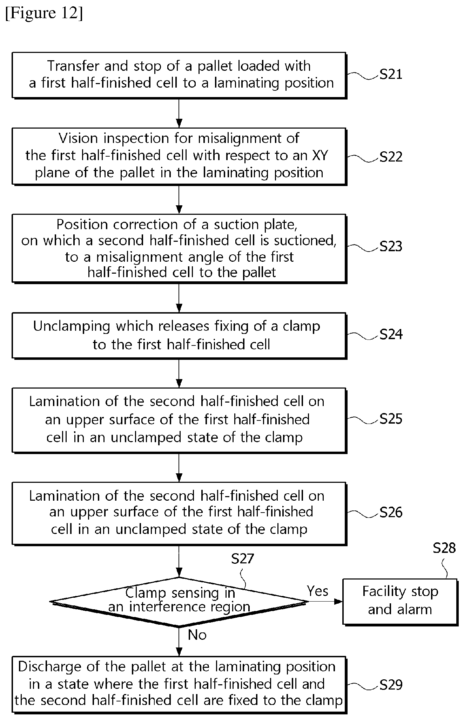

Figure 9 is a diagram for explaining operational states of a suction plate of the pickup device and a clamping device during a second half-finished cell laminating step according to one example of the present invention, Figure 10 is an operational state diagram between a clamp and a suction plate when the clamp clamps a second half-finished cell in a state where the suction plate according to the present example is placed on a normal position of a pallet, and Figure 11 is an operational state diagram between a clamp and a suction plate when the clamp clamps a second half-finished cell in a state where the suction plate according to the present example is placed on a clamping interference position. Then, Figure 12 is a flowchart for explaining a method of laminating an electrode assembly according to one example of the present invention.

The method of laminating an electrode assembly may comprise a second half-finished cell laminating step (S25) in which a pallet (150) loaded with a first half-finished cell (10) moves to a stopped laminating position (X1) in a state where a suction plate (220) of a pickup device (200) has suctioned a second half-finished cell (20), and the second half-finished cell (20) is laminated on an upper surface of the first half-finished cell (10), a second half-finished cell clamping step (S26) in which in a state where the suction plate (220) is positioned on the upper surface of the first half-finished cell (10), a clamp (173) of a clamping device (170) mounted on the pallet (150) enters an open portion (226) of the suction plate (220) to fix the second half-finished cell (20) to the upper surface of the first half-finished cell (10), and a collision sensing step (S27) of sensing a collisions between the clamp (173) and the suction plate (220) through a sensor (250) mounted on the suction plate (220).

The method of laminating an electrode assembly may comprise a transfer step (S21), a vision inspection step (S22), a position correction step (S23) of a suction plate (200), an unclamping step (S24), a second half-finished cell laminating step (S25), a second half-finished cell clamping step (S26), a collision sensing step (S27), and a facility stop step (S28).

Referring to Figures 4 and 5, in the transfer step (S21), the pallet (150) is transferred from the unit cell lamination device (500) along the rail (130) to the laminating position (X1). Then, the first half-finished cell (10) may be transferred in a state where it is fixed to the pallet (150) through the clamp (173).

The pallet (150) is stopped at the laminating position (X1) for a preset period. The pallet (150) may be stopped at the laminating position (X1) while performing the vision inspection step (S22), the position correction step (S23) of the suction plate (200), the unclamping step (S24), the second half-finished cell laminating step (S25), and the second half-finished cell clamping step (S26).

Referring to Figure 5, if the pallet (150) on which the first half-finished cell (10) is loaded is stopped at the laminating position (X1), the vision inspection step (S22) is performed, in which the vision inspection device (300) installed coaxially with the laminating position (X1) in the vision inspection device (300) photographs the pallet (150) on which the first half-finished cell (10) is loaded, and the misalignment of the first half-finished cell (10) is inspected with respect to the pallet (150) based on the XY plane of the pallet (150).

The vision inspection step (22) is performed before the second half-finished cell laminating step (S25). The vision inspection device (300) may acquire the misalignment angle and misalignment direction of the virtual center line of the first half-finished cell (10) with respect to the virtual center line (L1) of the pallet (150).

Referring to Figure 9, the pickup device (200) may be operated so that the suction plate (220) suctions one sheet of the second half-finished cell (20) from the buffer table (700) to move it to the laminating position (X1).

The suction plate (220) may be position-adjusted so that the virtual center line (L3) of the suction plate (220) is parallel to the virtual center line (L2) of the first half-finished cell (10) and the center of the suction plate (220) is positioned coaxially with the center of the first half-finished cell (10), based on the misalignment angle of the first half-finished cell (10) with respect to the XY plane of the pallet (150) acquired through the vision inspection step (S22) .

An unclamping step (S24) is performed before the suction plate (220) moves down toward the first half-finished cell (10). The unclamping step (S24) is performed in a stop state of the pallet (150).

In the unclamping step (S24), the clamp (173) may be moved from the clamping position to the unclamping position through lifting and rotating to release the fixation to the first half-finished cell (10).

In the unclamped state, the clamp (173) is positioned at an unclamping position (see Figure 6(b)) of the pallet (150). The unclamping position (see Figure 6(b)) is a position which is parallel to the virtual center line (L1) of the pallet (150) and spaced apart from the first half-finished cell (10).

Referring to Figure 9, the suction plate (220) may move down toward the first half-finished cell (10) in the unclamped state of the clamp (173) and be positioned on the upper surface of the first half-finished cell (10).

The suction plate (220) may be positioned on the upper surface of the first half-finished cell (10) while the clamp (173) performs a clamping operation for fixing the second half-finished cell (20) to the upper surface of the first half-finished cell (10).

In the second half-finished cell clamping step (S26), the clamping device (170) may fix the second half-finished cell (20) and the first half-finished cell (10) to the pallet (150) as the clamp (173) enters the open portion (226) of the suction plate (220) by rotating 90° in a direction where it approaches the first half-finished cell (10) from the unclamping position, and descends toward the second half-finished cell (20) suctioned to the suction plate (220).

The collision sensing step (S27) may be performed as the clamp (173) is sensed in the interference region of the open portion (226) when the clamp (173) enters the open portion (226) in a state where the suction plate (220) is positioned on the upper surface of the first half-finished cell (10).

If the sensor (250) mounted on the suction plate (220) senses the clamp (173) during the second half-finished cell clamping step (S26), the controller (800) may stop the stacking facility (1000) (S28). Furthermore, it may provide a warning alarm upon stop of the stacking facility (1000).

By automatically stopping the stacking facility (1000) upon collision sensing of the sensor (250), it is possible to prevent damage to the suction plate (220) due to repeated collisions with the clamp (173). Furthermore, by preventing taping defects of the electrode assemblies (30) due to laminating defect of the electrode assemblies (30), it is possible to produce electrode assemblies (30) with a uniform quality.

If the sensor (250) mounted on the suction plate (220) does not sense the clamp (173) during the second half-finished cell clamping step (S26), the stacking facility (1000) operates normally, whereby the pallet (150) may be transferred to the taping device (900) in a state where the second half-finished cell (20) is fixed to the upper surface of the first half-finished cell (10) (S29). Furthermore, after the second half-finished cell clamping step is completed, the suction plate (220) may release the suction of the second half-finished cell (20) and return to its original position (S29).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

It is described in the Detailed Description of Invention

## Claims

1. A stacking facility **characterized by** comprising:
a conveyor including a pallet loaded with a first half-finished cell and a clamping device arranged to fix the first half-finished cell to the pallet, and arranged to transfer the pallet to a laminating position; and
a pickup device including an open portion arranged for a clamp of the clamping device to be approachable and a suction plate having a suction surface to which a second half-finished cell is suctioned, and provided to laminate the second half-finished cell on the upper surface of the first half-finished cell, wherein
the pickup device comprises a sensor arranged to sense the clamp in an interference region of the open portion.

2. The stacking facility according to claim 1, **characterized in that**
operation of the pickup device is stopped if the sensor senses the clamp.

3. The stacking facility according to claim 1, **characterized in that**
operation of the clamping device is stopped if the sensor senses the clamp.

4. The stacking facility according to claim 1, wherein
the pickup device is arranged to provide a warning alarm if the sensor senses the clamp.

5. The stacking facility according to claim 1, wherein
the sensor is mounted on the suction plate to form a line-shaped sensing line in the interference region of the open portion, and is arranged to sense the clamp when the sensing line is disconnected.

6. The stacking facility according to claim 1, **characterized in that**
the interference region comprises a first open surface facing the entry side of the open portion and a periphery of the first open surface, and is a region capable of colliding with the clamp when the clamp enters the open portion, depending on a misalignment angle of the virtual center line of the suction plate relative to the virtual center line of the pallet.

7. The stacking facility according to claim 1, **characterized in that**
the open portion is arranged so that a partial region of the second half-finished cell without being suctioned to the suction surface is exposed to the outside, and
the sensor is mounted on the suction plate so that a sensing line is formed on the upper portion of the second half-finished cell exposed through the open portion.

8. The stacking facility according to claim 1, **characterized in that**
the sensor comprises a light emitter emitting light and a light receiver receiving light, and forms a sensing line, which is a line of light emitted from the light emitter and reaching the light receiver.

9. The stacking facility according to claim 8, **characterized in that**
the open portion is a region surrounded by a first open surface recessed inside from the outside of the suction plate, and a second open surface and a third open surface provided to face each other at both ends of the first open surface, and
the light emitter and the light receiver are mounted on the second open surface and the third open surface, respectively, thereby being provided to face each other.

10. The stacking facility according to claim 8, **characterized in that**
the sensing line is provided to be parallel to the virtual center line of the suction plate, and
the sensing line is formed to be spaced apart from the first open surface in the open portion.

11. The stacking facility according to claim 1, wherein
the clamping device further comprises a clamping drive part mounted on one side of the pallet and arranged to move the clamp up and down along a height direction perpendicular to the pallet.

12. The stacking facility according to claim 11, wherein
the clamping drive part is arranged to rotate the clamp at a predetermined angle so that the clamp is parallel or orthogonal to the virtual center line of the pallet.

13. The stacking facility according to claim 11, **characterized in that**
the clamp is arranged to be contactable with a partial region of the upper surface of the first half-finished cell loaded on the pallet, and is mounted to the clamping drive part to be parallel to the pallet.

14. The stacking facility according to claim 1, further comprising
a vision inspection device inspecting for misalignment of the first half-finished cell relative to the pallet based on the XY plane of the pallet by photographing the first half-finished cell loaded on the pallet coaxially with the laminating position and analyzing the image.

15. A method of laminating an electrode assembly, comprising:
a second half-finished cell laminating step in which a pallet loaded with a first half-finished cell moves to a laminating position in a state where a suction plate of a pickup device has suctioned a second half-finished cell, and then the second half-finished cell is laminated on an upper surface of the first half-finished cell;
a second half-finished cell clamping step in which in a state where the suction plate is positioned on the upper surface of the first half-finished cell, a clamp of a clamping device mounted on the pallet enters an open portion of the suction plate to fix the second half-finished cell to the upper surface of the first half-finished cell; and
a collision sensing step of sensing a collision between the clamp and the suction plate through a sensor mounted on the suction plate.

16. The method of laminating an electrode assembly according to claim 15, **characterized in that**
the collision sensing step is performed during the second half-finished cell clamping step.

17. The method of laminating an electrode assembly according to claim 16, **characterized in that**
the collision sensing step is a step of sensing whether the clamp enters an interference region of the open portion when the clamp enters the open portion in a state where the suction plate is positioned on the upper surface of the first half-finished cell.

18. The method of laminating an electrode assembly according to claim 15, **characterized in that**
if the sensor senses the clamp in the collision sensing step, operation of a stacking facility is stopped.

19. The method of laminating an electrode assembly according to claim 17, **characterized by** comprising
a vision inspection step, which is performed before the second half-finished cell laminating step and inspects misalignment of the first half-finished cell

20. The method of laminating an electrode assembly according to claim 19, **characterized in that**
in the second half-finished cell laminating step, the suction plate corrects the laminating position of the second half-finished cell based on a misalignment angle of the first half-finished cell acquired through the vision inspection step.
